# EUROPEAN PATENT SPECIFICATION

(11) **EP 2 749 444 B1**
(45) Date of publication and mention of the grant of the patent: **14.09.2016**
(21) Application number: 12839137.2
(22) Date of filing: 04.10.2012
(51) Int. Cl.: B60K 11/06, B60K 1/04, H01M 2/10

(54) **BATTERY PACK FOR DRIVING ELECTRIC VEHICLE**
BATTERIEPACK ZUM ANTREIBEN EINES ELEKTROFAHRZEUGS
BLOC D'ÉLÉMENTS D'ACCUMULATEUR POUR LA PROPULSION D'UN VÉHICULE ÉLECTRIQUE

(30) Priority: 07.10.2011 JP 2011223349
(43) Date of publication of application: 02.07.2014
(73) Proprietor: Automotive Energy Supply Corporation, Zama-shi, Kanagawa 252-0012 (JP)
(72) Inventor: YAMAMURA, Yuichirou, Zama-shi Kanagawa 252-0012 (JP); SHIMAMOTO, Keisuke, Zama-shi Kanagawa 252-0012 (JP); AOYAGI, Takeshi, Zama-shi Kanagawa 252-0012 (JP); KATAOKA, Shuji, Zama-shi Kanagawa 252-0012 (JP); OGATA, Shinya, Zama-shi Kanagawa 252-0012 (JP)
(74) Representative: Hoefer & Partner Patentanwälte mbB
(86) International application number: PCT/JP2012/075744
(87) International publication number: WO 2013/051638

(56) References cited:
- EP-A1- 0 817 288
- JP-A- 2000 085 375
- JP-A- 2000 085 375
- JP-A- 2001 088 564
- JP-A- 2003 146 087
- JP-A- 2008 251 308
- JP-A- 2011 194 982
- US-A1- 2005 255 379
- US-A1- 2010 009 244

## Description

### Technical Field

The present invention relates to an electric vehicle driven by an electric motor, which may be a so-called hybrid electric vehicle provided with both of an electric motor and an internal combustion engine, and relates particularly to a vehicle driving battery pack mounted to a vehicle body.

### Background Art

US 2005/0255379 A1 discloses a multi-cell battery comprising a housing having one or more partitions dividing the housing into a plurality of regions. A dielectric material lines the surfaces of the housing within each of the regions and an electrochemical cell is disposed within each of the regions. The housing is used as a heat sink to draw heat away from the individual electrochemical cells during operation.

In recent years, development of electric vehicles driven by electric motors has been accelerated. In general, a battery (usually, a rechargeable secondary battery) as an energy source for an electric vehicle is implemented by a battery pack in which multiple cells are accommodated in a hard casing. The battery pack is mounted to a floor part or the like of a vehicle body. Although the multiple cells can be accommodated directly in the casing, several ones of the multiple cells are first accommodated in a metal case to form a battery module, and then, multiple battery modules are combined as several stacks and accommodated in the casing.

The battery pack described above is a large and heavy part, so that there are two methods for mounting to a vehicle body of an automotive vehicle: one is to ensure a special accommodation space on a vehicle body floor, and place the battery pack from above onto the vehicle body floor; and the other is to attach the battery pack from below onto an underside of the vehicle body floor. The former method is usually adopted in cases where a special chassis is designed only for an electric vehicle, whereas the latter method is usually adopted in cases a basic chassis design is commonly used by an electric vehicle and an internal combustion engine vehicle.

A patent document 1 discloses the latter method, namely, the configuration where the battery pack is attached from below onto the underside of the vehicle body floor. In such a configuration, it is highly possible that a part of a lower part of the battery pack projects downward below the underside of the vehicle body, due to a requirement about the height position of a vehicle interior side floor, as in patent document 1. In other words, in many cases, the underside of the battery pack is located below the level of ground clearance of the vehicle body itself. Especially for a rear wheel side, vehicle body components are located higher than in a front wheel side, so that at a rear end side of the battery pack, the lower part of the battery pack is exposed without covering by the vehicle body components.

Accordingly, when the vehicle is traveling backward, it is possible that the lower part of the battery pack may collide directly with a curb projecting from a road surface, or a car stop in a parking space.

Moreover, in patent document 1, an upper case of the battery pack is made of a synthetic resin having a low thermal conductivity, so that a blower unit is provided for forcing cooling air to flow in the casing of the battery pack, and thereby dissipating heat occurring from the cells.

Moreover, in patent document 1, a flange of a periphery of a lower case of the battery pack is formed with four locator hol.es in the form of slits, and accordingly, the vehicle body is formed with tongue-shaped locator projections. Accordingly, when the battery pack is mounted, the positioning of the battery pack is implemented by engagement between the locator holes and the locator projections.

In this way, in the configuration of patent document 1, the locator projections are provided at the vehicle body side, and the locator projections and the locator holes are used only for positioning the battery pack with respect to the vehicle body after the battery pack is assembled by combining the lower case and the upper case. Accordingly, when the upper case is assembled to the lower case, it requires another locator mechanism such as one employing a zig or the like.

In the configuration of patent document 1, it is necessary to engage the four slit-shaped locator holes with the four tongue-shaped locator projections simultaneously, which is disadvantageous for the efficiency of operation.

### Prior Art Document(s)

### Patent Document(s)

Patent Document 1: JP 2000-085375 A

### Summary of the Invention

It is an object of the present invention to protect a battery pack reliably from collision with a curb projecting from a road surface or the like, while facilitating dissipation and cooling of the battery pack without an additional device such as a blower unit.

It is an another object of the present invention to allow to locate a lower case and an upper case constituting a battery pack with respect to each other, by using a locator mechanism for locating the battery pack with respect to a vehicle body, and thereby improves the efficiency of overall operation including an assembling operation of the battery pack.

According to the present invention, an electric vehicle is provided as defined by the features claim 1, wherein the driving battery pack is mounted to an underside of a vehicle body floor, wherein multiple cells are accommodated in a casing, wherein the casing includes an upper case and a lower case. For example, in an embodiment, a bottom wall of the lower case projects downward below a ground clearance level of a vehicle body.

In a mode of the present invention, at least the lower case of the casing is made of metal by die casting; at least one end wall of a front end wall and a rear end wall of the lower case facing in a vehicle travel direction (namely, in a longitudinal direction of a vehicle body) is formed integrally with a plurality of cooling fins; each cooling fin projects from the one end wall in the vehicle travel direction, and extends in a vertical direction, and includes an upper end connected integrally with a flange of a periphery of the lower case, and includes a lower end reaching a bottom wall of the lower case.

It is preferable that the lower end of the cooling fin includes an edge ascending as followed away from the one end wall.

The feature that the front end wall and rear end wall of the lower case made of metal by die casting is formed integrally with the plurality of cooling fins along the vehicle travel direction, serves to enhance the facility of thermal dissipation and cooling against heating of the cells while causing no increase of vehicle running resistance.

Each cooling fin extends in the vertical direction from the flange of the periphery of the lower case to the bottom wall of the lower case, serving as a reinforcing rib or a kind of protector to protect the end wall (i.e. the front end wall or rear end wall), in addition to the enhancement of the cooling facility. Specifically, the cooling fin protects a bottom corner portion where the end wall and the bottom wall are connected, from collision with a curb, a car stop, etc. When a collision occurs, a load is applied to the cooling fin, and is dissipated to the flange of the periphery of the lower case and the bottom wall of the lower case, so that local deformation of the lower case itself (namely, the end wall and bottom wall) is suppressed. This serves to suppress the internal battery modules and battery cells from being damaged.

Especially, in the configuration where the lower end edge of the cooling fin is inclined, for example, when the inclined lower end edge collides with a corner of a curb, the curb can be let off along the lower end edge, and a load of collision can be effectively dissipated.

In a preferable embodiment, the casing is hermetically sealed; and a safety valve is disposed at the one end wall, and adjacent to the cooling fins, and is configured to open in response to a rise of an internal pressure of the casing. Accordingly, when it collides with a curb or the like, or when it collides with some part under a condition before mounting to a vehicle, the adjacent cooling fins protect the safety valve, and suppress the safety valve from being damaged. The safety valve may be disposed between adjacent two of the cooling fins.

In another mode of the present invention, the upper case and the lower case are made of metal by die casting, and bolted to each other under a condition where a joint flange surface of a periphery of the upper case and a joint flange surface of a periphery of the lower case are made to face each other. Each of side portions of the lower case in a vehicle lateral direction is formed with a locator pin, wherein the locator pin includes a tapered distal end portion and projects upward. The upper case includes mounting flanges, each of which is formed with a locator hole corresponding to one of the locator pins. The lower case and the upper case are located with respect to each other by fitting between the locator pins and the locator holes. Each locator pin passes through the corresponding locator hole, and projects upward above the corresponding mounting flange, and is fitted in a locator hole of a vehicle body, locating the battery pack with respect to the vehicle body.

According to the second invention described above, assembling of the lower case and the upper case by bolting is made easy, because the lower case and the upper case are located with respect to each other accurately by the locator pins of the lower case each of which has the tapered distal end portion. Moreover, the same locator pins accurately locate the entire battery pack with respect to the vehicle body, which reduces the number of required locator pins as a whole, and makes accuracy control easy, and allows to accurately mount both of the lower case and the upper case in a prescribed position with respect to the vehicle body.

The feature that each locator pin has the tapered distal end portion serves to accurately locate the battery pack by allowing the tapered shape of the distal end portion to guide the battery pack, when the battery pack is moved upward for attachment to the vehicle body. This makes it easy to mount the battery pack to the vehicle body from below. The feature that the locator pins are provided in the battery pack itself, makes it possible to mount the battery pack to the prescribed position in the vehicle body without a special locator zig, for example, when the battery pack has been detached from the vehicle for check and maintenance of the automotive vehicle.

In a preferable embodiment, a first one of the locator pins is disposed at one of the side portions of the lower case; a second one of the locator pins is disposed at another one of the side portions of the lower case; and the first locator pin is higher than the second locator pin with respect to the joint flange surfaces.

The feature that the two locator pins have different heights serves to achieve an efficient locating operation by first allowing the distal end portion of the relatively high first locator pin loosely into the corresponding locator hole, and then locating the second locator pin with respect to the corresponding locator hole.

In another preferable embodiment, each locator pin includes a tapered portion at a distal end side, and a straight portion including a surface that is continuous with an inclined surface of the tapered portion, and parallel to a central axis of the locator pin; and the straight portion of the locator pin is fitted in the corresponding locator hole of the upper case and the corresponding locator hole of the vehicle body. Namely, accuracy control depends on the straight portion at the proximal end side, not on the tapered portion.

The locator pin of the present invention may have a shape other than the simple conical shape. For example, in a specific embodiment, a first one of the locator pins is disposed at one of the side portions of the lower case; a second one of the locator pins is disposed at another one of the side portions of the lower case; and the first locator pin includes a conical distal end portion; the second locator pin includes a distal end portion that has a shape produced by cutting off parts of a conical peripheral surface by two planes parallel to each other; and each locator hole of the vehicle body conforms to the shape of the distal end portion of the corresponding locator pin. The feature that the second locator pin being the flat locator pin is fitted in the corresponding narrow locator hole, serves to restrict the position also in the rotational direction around the locator pin, in contrast to conical or cylindrical locator pins.

It is desirable that the two parallel planes at the distal end portion of the second locator pin form tangential lines of a circle about a center of the conical shape of the first locator pin. In this case, the battery pack is rotatable about the first locator pin, so that the battery pack is guided into the prescribed position naturally by the tapered shape of the distal end portion of the second locator pin, and the second locator pin can be fitted in the locator hole of the vehicle body easily and reliably.

In a further specific embodiment, the second locator pin includes a circular-cylindrical portion including a circular-cylindrical surface at a proximal portion, wherein the circular-cylindrical portion is fitted in the locator pin of the upper case; and a portion of the second locator pin projecting from the corresponding locator hole of the upper case includes: a second circular-cylindrical surface as an extension of the circular-cylindrical surface; a conical surface continuous with the second circular-cylindrical surface; and the two parallel planes extending in an axial direction of the second locator pin to cut off parts from the second circular-cylindrical surface and the conical surface. In this configuration, the upper case is not restricted in the rotational direction by the second locator pin, so that when the lower case and the upper case are located with respect to each other, the combination with the first locator pin having the con.ical distal end portion serves to achieve an easy and reliable locating operation.

According to the battery pack of the present invention provided with the cooling fins, it is possible to enhance the facility of thermal dissipation and cooling without causing an increase of vehicle running resistance, and allow the cooling fins to protect the battery pack and suppress the battery pack itself and the internal cells and others from being damaged, when it collides with a curb projecting from a road surface or a car stop or the like.

According to the second invention employing the locator pins, it is easy to assemble the lower case and the upper case with bolting, because the lower case and the upper case are accurately located with respect to each other. Moreover, the same locator pins accurately locate the entire battery pack with respect to the vehicle body, which reduces the number of required locator pins as a whole, and makes accuracy control easy, and allows to accurately mount both of the lower case and the upper case in a prescribed position with respect to the vehicle body.

### Brief Description of the Drawings

FIG. 1 is a side view of an electric vehicle provided with a battery pack.
FIG. 2 is a bottom view of the electric vehicle.
FIG. 3 is a plan view of the whole battery pack.
FIG. 4 is an elevation view of the battery pack from the rear.
FIG. 5 is a left side view of the battery pack.
FIG. 6 is a right side view of the battery pack.
FIG. 7 is an elevation view of the battery pack from the front.
FIG. 8 is a bottom view of the battery pack.
FIG. 9 is a sectional view taken along the line IX-IX in FIG. 3.
FIG. 10 is a perspective view of a lower case.
FIG. 11 is a perspective view of the lower case under a condition where the lower case is upside down.
FIG. 12 is a perspective view of an upper case.
FIG. 13 is a perspective view of the upper case under a condition where the upper case is upside down.
FIG. 14 is an elevation view of the lower case from the rear.
FIG. 15 is a right side view of the lower case.
FIG. 16 is a sectional view of a major part taken along the line XVI-XVI in FIG. 10.
FIG. 17 is a sectional view of a major part taken along the line XVII-XVII in FIG. 10.
FIG. 18 is a perspective view of a major part of the lower case.
FIG. 19 is a sectional view of a first tab portion of the lower case.
FIG. 20 is a sectional view of a second tab portion of the lower case.
FIG. 21 is a sectional view of a second tab portion of the upper case.
FIG. 22 is a sectional view of a first tab portion of the upper case.

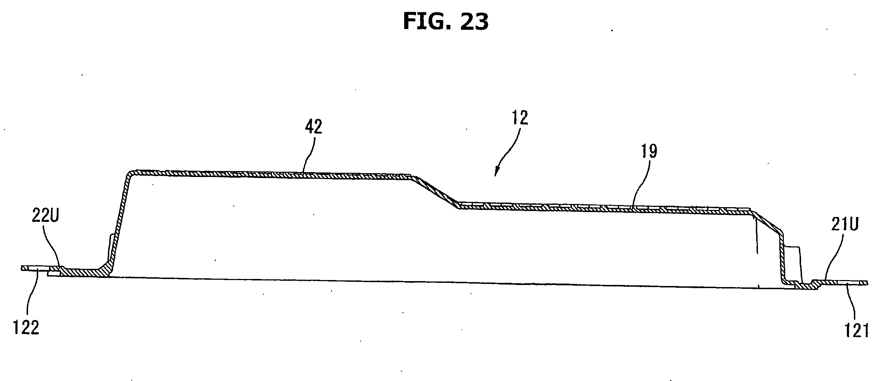

FIG. 23 is a sectional view of the upper case.
FIG. 24 is an elevation view of a first locator pin.
FIG. 25 is a plan view of the first locator pin.
FIG. 26 is a sectional view of the first locator pin.
FIG. 27 is an elevation view of a second locator pin.
FIG. 28 is a side view of the second locator pin.
FIG. 29 is a sectional view of the second locator pin.
FIG. 30 is a perspective view showing a second tab portion when the lower case and the upper case are assembled with each other.

### Mode(s) for Carrying Out the Invention

The following describes an embodiment of the present invention with reference to the drawings.

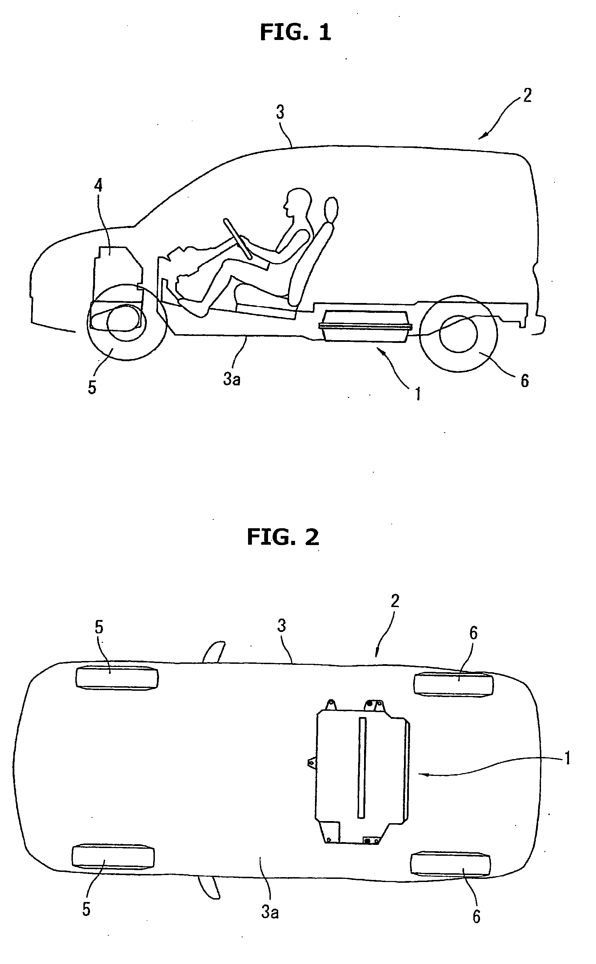

FIGS. 1 and 2 schematically show an electric vehicle 2 employing a battery pack 1 according to the present invention. The electric vehicle 2 is configured so that a drive motor unit 4 is mounted to a front part of a vehicle body 3 for driving front wheels 5. Battery pack 1, which serves as an energy source for drive motor unit 4, is attached from the downside to an underside of a vehicle body floor 3a. The battery pack 1 has a substantially rectangular box shape as a whole, having a shorter size in a vehicle longitudinal direction than in a vehicle lateral direction, wherein battery pack 1 occupies a considerable part of the entire width of the vehicle in the vehicle lateral direction. As shown in FIG. 2, battery pack 1 is arranged in a region surrounded by four wheels, namely, front wheels 5 and rear wheels 6. In this embodiment, battery pack 1 is located in a position close to feet of a rear-sheet passenger not shown. The substantially rectangular battery pack 1 includes a front side edge and rear side edge basically perpendicular to the vehicle longitudinal direction.

The thus-arranged battery pack 1 has an underside exposed to the downside of the vehicle, projecting downward with respect to a surrounding portion of vehicle body floor 3a. Namely, the underside of battery pack 1 is below the level of ground clearance of vehicle body 3 itself. Vehicle body floor 3a and other vehicle body components are located in higher positions at the side of rear wheels 6 than at the side of front wheels 5, because the so-called departure angle of the side of rear wheels 6 is generally larger than the approach angle of the side of front wheels 5. Accordingly, at the rear end side of battery pack 1, a lower part of battery pack 1 is exposed without covering by the vehicle body components, as viewed from the rear side of the vehicle.

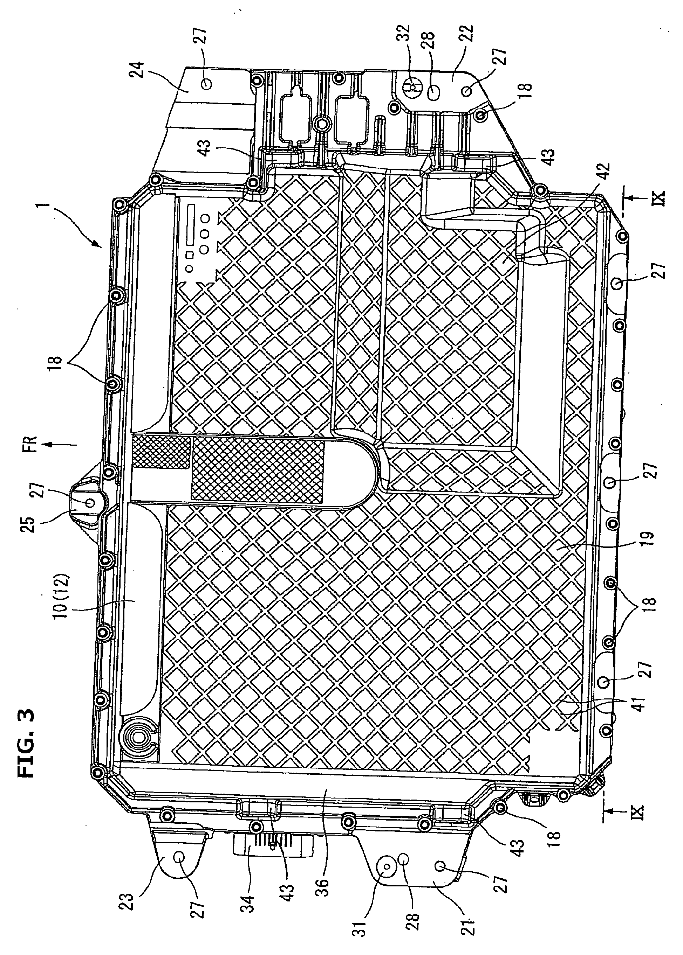

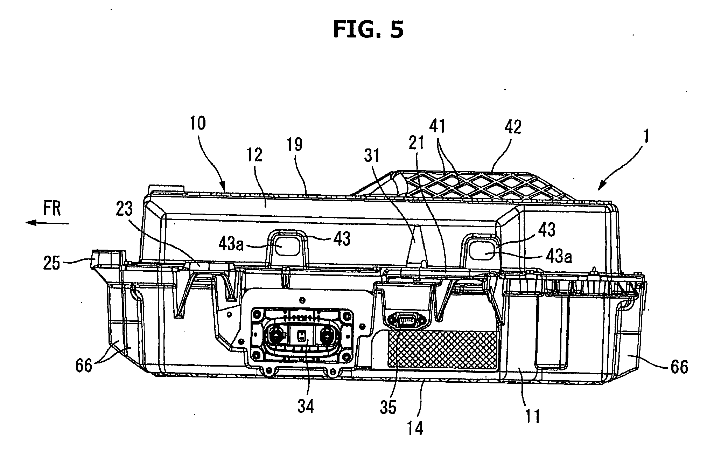

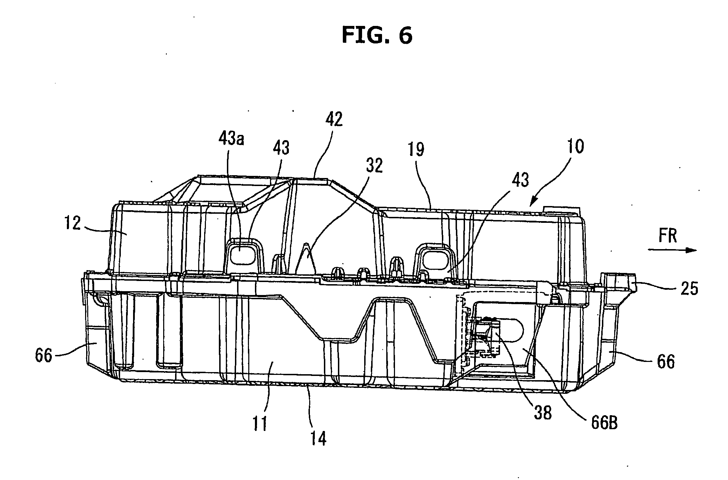

FIGS. 3 to 8 show the battery pack 1. The battery pack 1 is configured by accommodating multiple cells in a case 10 composed of a lower case 11 constituting a lower side part and an upper case 12 constituting an upper side part. Although cell arrangement is not shown, laminate-film-sealed and flat lithium ion cells are employed, and a plurality of the cells (four cells, for example) are layered and accommodated in a metal case having a flat rectangular box shape, to form a battery module, for example. Then, a plurality of the battery modules are layered on and fixed to each other to form a stack. Finally, a plurality of the stacks are accommodated in case 10. For example, several tens of battery modules in total are accommodated in case 10, and connected in series to each other, to obtain hundreds of volt required to drive the vehicle. Accordingly, the weight of battery pack 1 is very heavy, and about 200-300 kg as a whole. Manufacturing of battery pack 1 is implemented by a process of arranging the stacked battery modules in lower case 11, and then placing the upper case 12 over lower case 11, and fixing the upper case 12 and lower case 11 to each other. The weight of upper case 12 as a unit is about 20 kg.

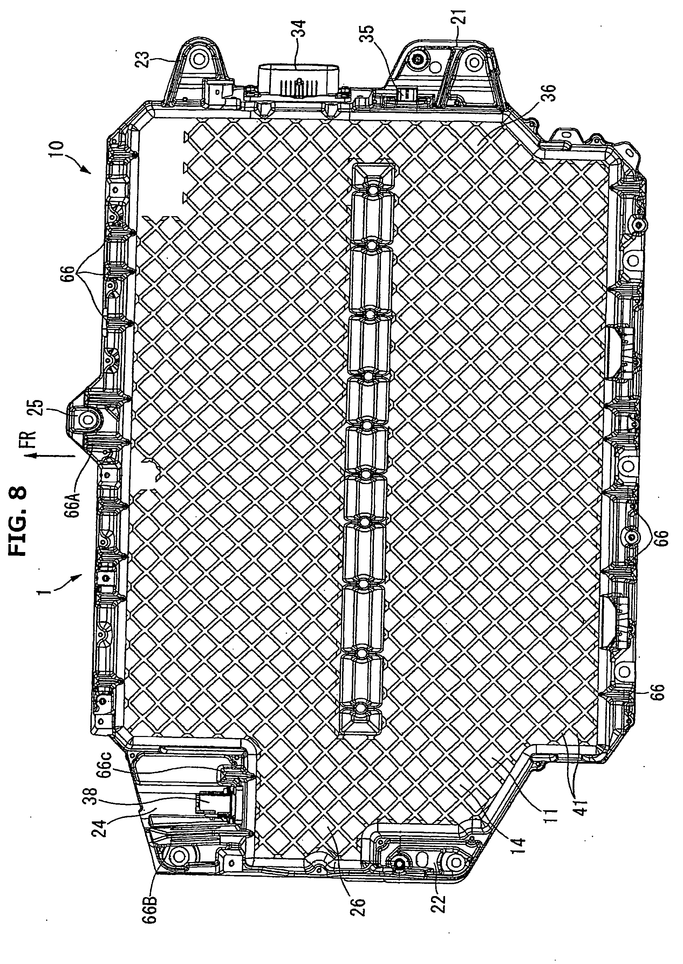

FIG. 3 is a plan view of battery pack 1 from above. When battery pack 1 is mounted to the vehicle, the upper side of FIG. 3 corresponds to the front of the vehicle, and the lower side of FIG. 3 corresponds to the rear of the vehicle. In the following description about battery pack 1, for ease of explanation, the direction to the upper side of FIG. 3 is defined as "frontward", the direction to the lower side of FIG. 3 is defined as "rearward", the direction to the right side of FIG. 3 is defined as "rightward", and the direction to the left side of FIG. 3 is defined as "leftward", regardless of the posture of battery pack 1 in the drawings, unless otherwise designated. Accordingly, for example, in FIG. 8, "the left side portion of battery pack 1 (or case 10)" is shown as a portion in the right side of FIG. 8. Similarly, the "upward" and "downward" are assumed to indicate vertical directions with respect to the posture of battery pack 1 mounted to the vehicle in principle. In the drawings, an arrow "FR" indicates a forward travel direction of the vehicle (also indicating the forward direction of battery pack 1).

Lower case 11 and upper case 12 are made of light alloy such as aluminum alloy by die-casting, and made to face to each other at a joint flange surface 15 of the periphery on a plane located between a bottom wall 14 of lower case 11 and a top wall 19 of upper case 12. Upper case 12 is fixed to lower case 11 by a plurality of bolts 18 which are arranged at the periphery to pass through the joint flange surface 15. When joining the lower case 11 and upper case 12, joint flange surface 15 is applied with a liquid gasket as a sealing member, to form a hermetically sealed space in case 10. This prevents inflow of moisture and the like from the outside, and thereby suppresses corrosivity of connecting parts and others of the battery modules.

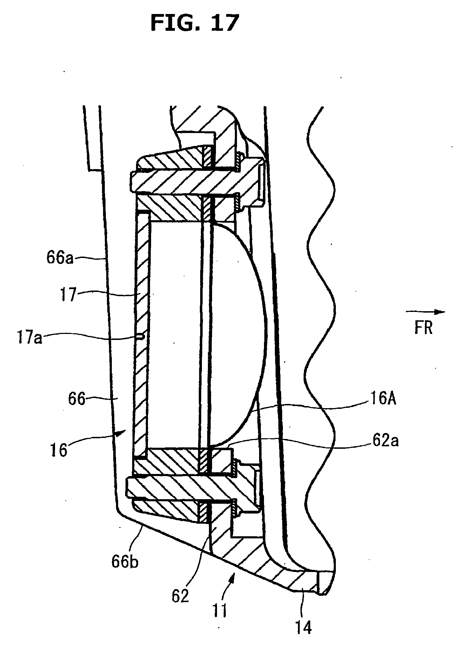

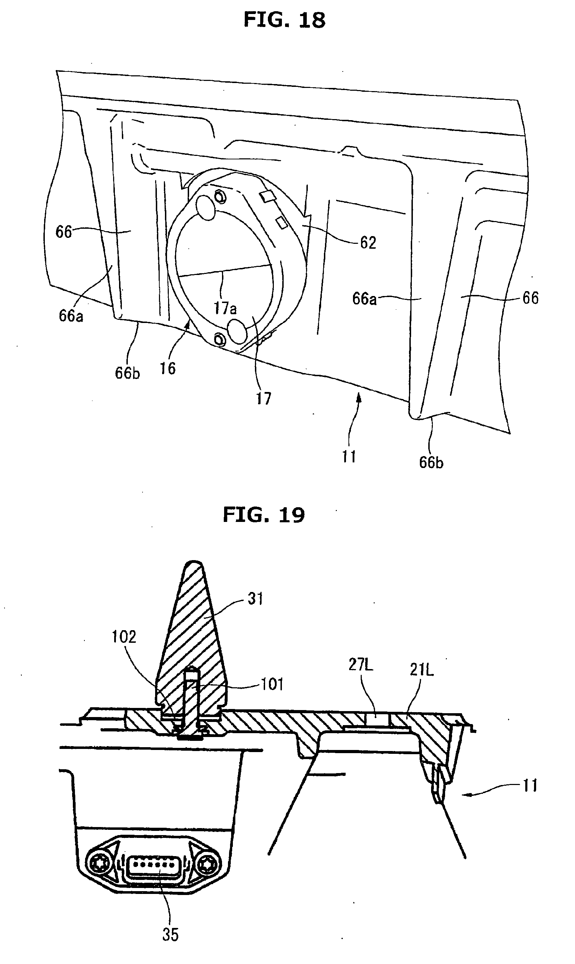

On the other hand, for opening the internal space of case 10 in case the internal pressure of case 10, which is maintained in the hermetically sealed space, rises excessively due to some abnormality, a pair of safety valves 16 are arranged at the rear side of lower case 11. The safety valve 16 includes a valve element 16A which is formed of a thin metal sheet into a dome shape, as shown in FIGS. 17 and 19. When the internal pressure of case 10 reaches a predetermined pressure, the dome-shaped valve element 16A is broken by buckling due to pressure difference, to open the inside of case 10. The front side of valve element 16A is formed with a circular protection synthetic resin plate 17 which is recessed to form a slit 17a extending radially for allowing the slit 17a to be easily broken, and protection synthetic resin plate 17 protects valve element 16A from stone strikes and others.

The left and right sides of case 10 are provided with a first tab portion 21 and a second tab portion 22 respectively, each of which serves as a mounting part to vehicle body 3. The first tab portion 21 and second tab portion 22 project outwardly in the left direction and right direction respectively from joint flange surface 15 of the periphery. Specifically, first tab portion 21 projects outwardly like an ear. Aligned with first tab portion 21, a third tab portion 23 is provided closer to the front side of the left side of case 10, projecting similarly like an ear and serving as a mounting part to vehicle body 3. On the other hand, as viewed from above and shown in FIG. 3, second tab portion 22 is continuous with a junction box accommodation portion 26 (see FIG. 8) described below which bulges partially rightward from the cell (battery module) accommodation space of case 10. On the front side of second tab portion 22, a fourth tab portion 24 is provided which has a trapezoid shape continuous similarly with junction box accommodation portion 26. At a central part of the front edge of case 10, a front bracket 25 is provided which serves as a mounting part to vehicle body 3.

The first tab portion 21, second tab portion 22, third tab portion 23, fourth tab portion 24, and front bracket 25 are formed with respective through holes 27 through which bolts not shown for mounting to the vehicle body are to be inserted. Three similar through holes 27 for bolts are formed at the rear edge of case 10, to pass through the joint flange surface 15. Accordingly, case 10, namely, battery pack 1, is fixed to vehicle body 3 at eight spots in total by bolts not shown. The bolts are arranged in a substantially vertical direction, and inserted into through holes 27 from the downside.

Each of the first tab portion 21 and second tab portion 22 is formed with a zig hole 28 in addition to bolt through hole 27, wherein a distal end portion of a zig of a lifter or the like is inserted through the zig hole 28 during assembling operation or the like. The zig hole 28 of second tab portion 22 has an elliptical shape having a slightly greater size in the lateral direction of case 10.

Moreover, first tab portion 21 and second tab portion 22 are provided with a first locator pin 31 and a second locator pin 32 respectively adjacent to the corresponding zig holes 28. First locator pin 31 and second locator pin 32 constitute a locating mechanism described in detail below.

As shown in FIGS. 3, 5 and 8, a service plug 34 is laterally arranged at the left side surface of battery pack 1, for shutting off a high-power circuit. Adjacent to service plug 34, a signal connector 35 is arranged in a position under the first tab portion 21, for communication between a battery controller not shown in battery pack 1 and a main controller not shown at the vehicle body side. The battery controller is accommodated in a position in case 10 which is adjacent to the service plug 34, namely, closer to the front side of a space from the proximity of first tab portion 21 to the proximity of third tab portion 23 which slightly projects to the left side in FIG. 3 (which space is a controller accommodation part shown by reference character 36 in FIGS. 3 and 8).

Main plug 38 for electric power supply to drive motor unit 4 is arranged at the front side of junction box accommodation portion 26 to extend forward, and is positioned under the fourth tab portion 24. The main plug 38 is connected to a connector not shown which is provided at vehicle body 3. The upper side of the whole of main plug 38 and the connector is covered by the eave-shaped fourth tab portion 24.

The bottom wall 14 of lower case 11 is configured to extend along a plane parallel to joint flange surface 15. Almost all of the external surface of bottom wall 14 is formed with ribs 41 in grid pattern as shown in FIG. 8. The height of rib 41, namely, the amount of projection of rib 41 from the wall surface, is smaller than the thickness of bottom wall 14. Ribs 41 are formed in directions inclined by 45 degrees from the fore-and-aft direction of battery pack 1.

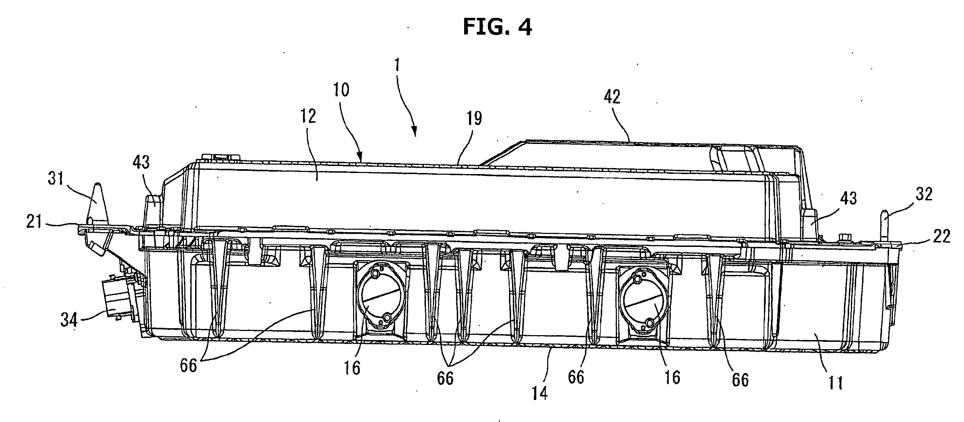

On the other hand, as clearly shown in FIGS. 4 to 7, the top wall 19 of upper case 12 is formed so that a major part thereof extends along a plane parallel to joint flange surface 15, and a part thereof closer to junction box accommodation portion 26 (indicated by reference character 42) slightly bulges upward. The bulge portion 42 serves to partially expand the internal space, which accommodates a cable connecting the stacks of battery modules and a junction box, and others. The external surface of top wall 19 is formed with ribs 41 in grid pattern, similar to the bottom wall 14 of lower case 11. Each of the left and right sides of upper case 12 is provided with a pair of boss portions 43, wherein boss portion 43 includes a recess portion 43a with which a zig not shown is to engage, to hung the upper case 12 during assembling operation of battery pack 1.

The following describes configuration of case 10 composed of lower case 11 and upper case 12 in detail. It is to be noted that the following drawings include drawings in which it is illustrated under a condition where a part of components are attached, and drawings in which no component is attached.

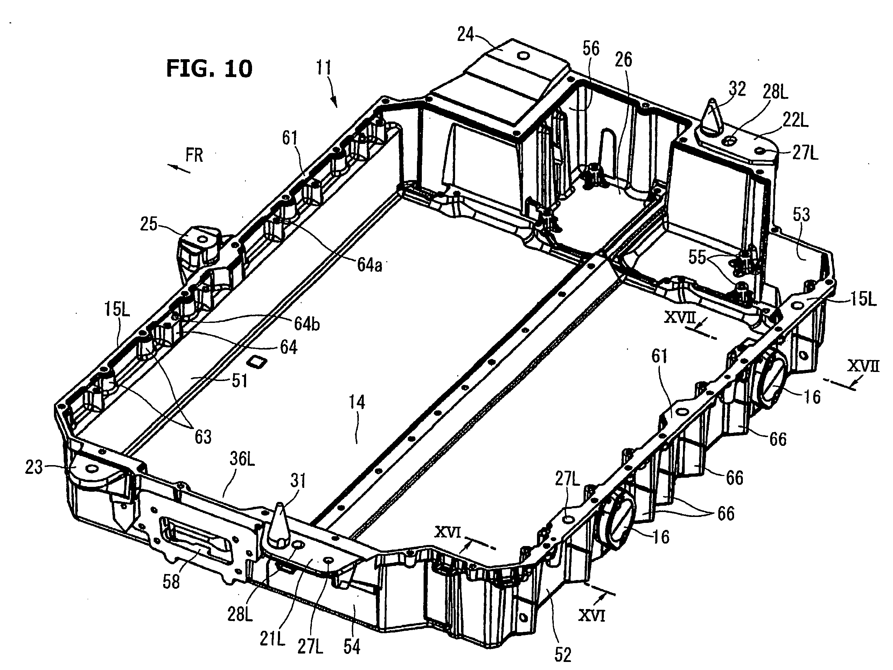

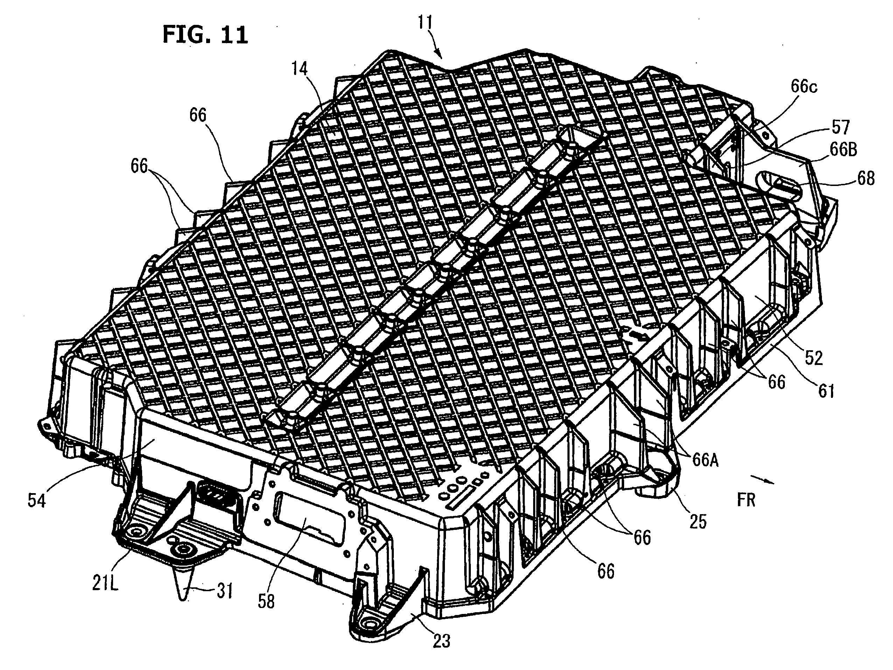

FIG. 10 is a perspective view of lower case 11 from above, and FIG. 11 is a perspective view of lower case 11 under a condition where lower case 11 is upside down. As shown in FIGS. 10 and 11, lower case 11 has a rectangular box shape having an opening at the upper side, and includes a front end wall 51, a rear end wall 52, a right side wall 53, and a left side wall 54. The right side part of lower case 11 is formed with the junction box accommodation portion 26 projecting outward, wherein the bottom surface thereof is formed with a plurality of boss portions 55 each of which includes a screw hole for fixing a junction box not shown. The wall 26 on the front side of junction box accommodation portion 26 is formed with an opening 57 for mounting the main plug 38, wherein the opening 57 has an elliptical shape longer in the vertical direction.

The left side part of lower case 11 is formed with a controller accommodation portion 36L that projects outward for accommodating the battery controller, wherein the left side wall 54 has a narrow opening 58 for attachment of service plug 34. The remaining region in lower case 11 other than the junction box accommodation portion 26 and controller accommodation portion 36L has a rectangular shape in which multiple battery modules are arranged as described above.

The periphery of the upper side of lower case 11 around the opening, namely, the upper ends of front end wall 51, rear end wall 52, right side wall 53, and left side wall 54, are formed with respective flanges 61 which are folded outwardly, wherein the upper side surfaces of flanges 61 constitute the joint flange surface 15L.

Incidentally, the subscript "L" for the reference characters indicates the components of lower case 11, of the components of case 10 composed of lower case 11 and upper case 12, whereas the subscript "U" indicates the components of upper case 12. For example, the joint flange surface 15 of case 10 specifically includes a joint flange surface 15L of lower case 11 and a joint flange surface 15U of upper case 12.

First tab portion 21 is constituted by both of lower case 11 and upper case 12, wherein first tab portion 21L provided at lower case 11 projects outwardly more than joint flange surface 15L as described above, and is formed slightly above the plane of joint flange surface 15L. Similarly, second tab portion 22 is constituted by both of lower case 11 and upper case 12, wherein second tab portion 22L of lower case 11 projects outwardly more than joint flange surface 15L on junction box accommodation portion 26 as described above, and is formed slightly above the plane of joint flange surface 15L. The upper side surface of first tab portion 21L and the upper side surface of second tab portion 22L are flush with each other. At the right side portion of lower case 11, the joint flange surface 15L of lower case 11 extends along the outer edge of junction box accommodation portion 26, wherein second tab portion 22L projects outwardly therefrom.

Third tab portion 23, which projects like an ear next to first tab portion 21, is constituted only by lower case 11, and is also formed slightly above the joint flange surface 15L. The center of front end wall 51 of lower case 11 is formed integrally with the front bracket 25. The front bracket 25 is constituted only by lower case 11, projecting upward from the joint flange surface 15L. The trapezoidal fourth tab portion 24, which is continuous with junction box accommodation portion 26 at the right side of lower case 11, is also constituted only by lower case 11, wherein the portion of fourth tab portion 24 close to through hole 27 is slightly above the joint flange surface 15L.

As described above, first tab portion 21L, second tab portion 22L, third tab portion 23, fourth tab portion 24, and front bracket 25 are positioned slightly above joint flange surface 15L, so that upper case 12 is fitted inside the steps of them with respect to joint flange surface 15L.

The bolt holes into which the bolts 18 are screwed to fix the upper case 12 are formed in boss portions 63 as shown in FIG. 10, wherein boss portions 63 are locally thicken portions of the upper end portions of front end wall 51 and rear end wall 52 except the proximity of junction box accommodation portion 26. The inside surfaces of front end wall 51 and rear end wall 52 are formed with a suitable number of boss portions 64, each of which is provided with a screw hole 64a for fixing the stacks of battery modules, and a knock pin 64b for locating the stacks.

The flange 61 at the upper edge of rear end wall 52 is formed with three through holes 27L through which bolts not shown for mounting to vehicle body 3 are inserted. The first tab portion 21L and second tab portion 22L are formed with respective through holes 27, similarly.

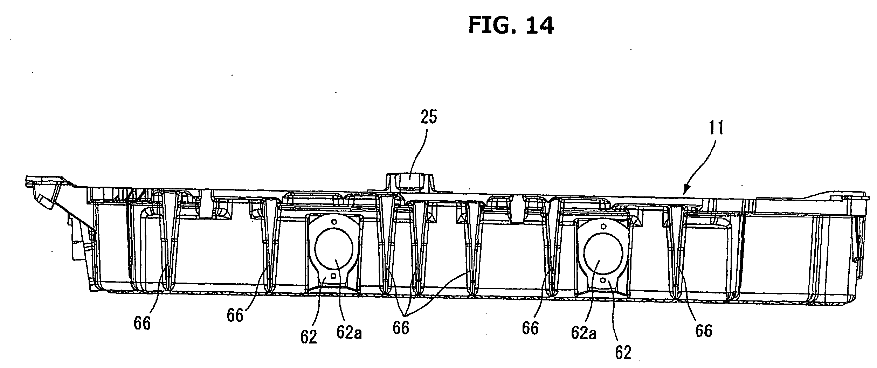

Moreover, the rear end wall 52 is formed with a safety valve mounting seat portion 62 having a circular opening 62a for mounting of the safety valve 16 as shown in FIG. 14.

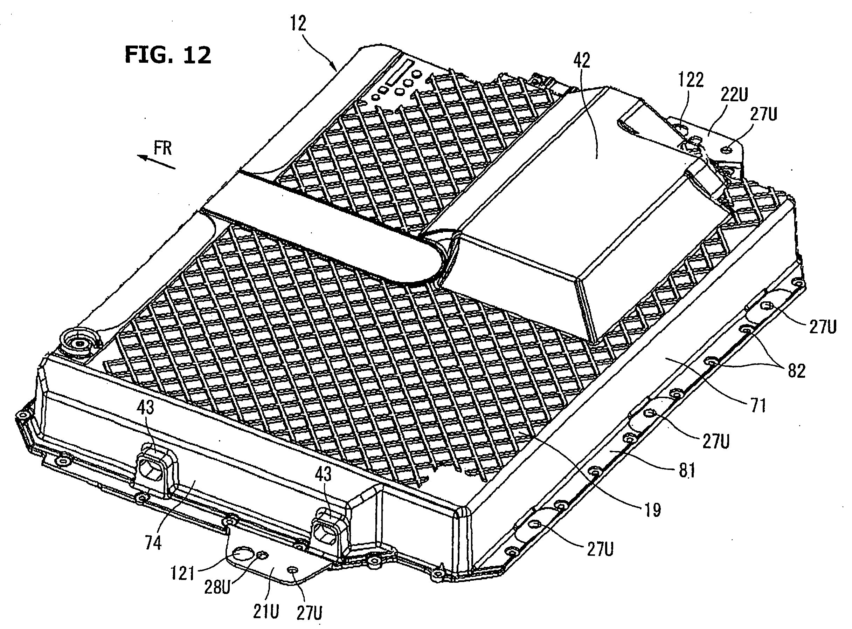

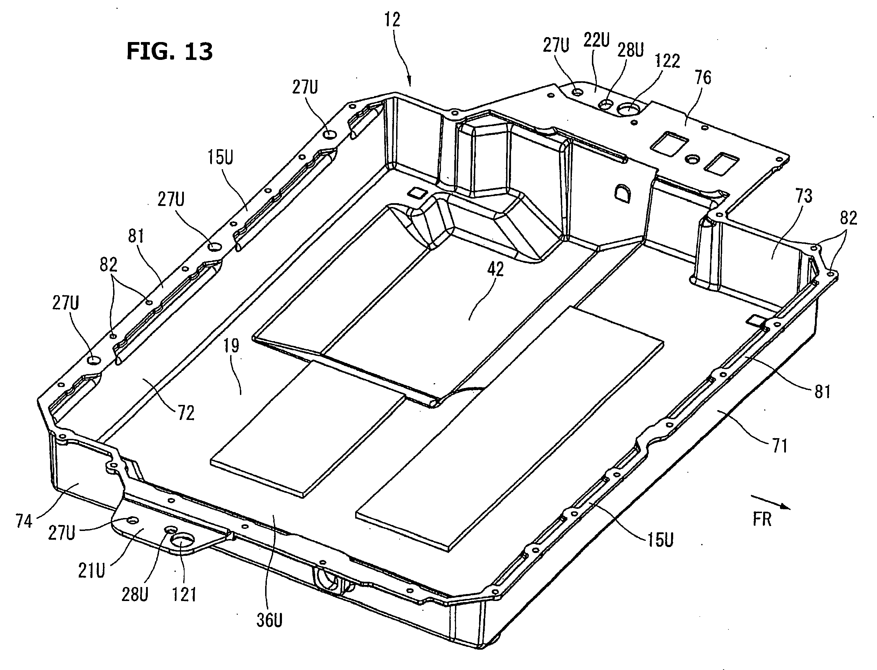

FIG. 12 is a perspective view of upper case 12 from above, and FIG. 13 is a perspective view of upper case 12 under a condition where upper case 12 is upside down. As shown in FIGS. 12 and 13, upper case 12 has a rectangular box shape having an opened underside, including the top wall 19, a front end wall 71, a rear end wall 72, a right side wall 73, and a left side wall 74. The top wall 19 includes the bulge portion 42 as described above. At the right side part of upper case 12, a junction box accommodation portion cover 76 extends outward from the lower end of right side wall 73, covering the upper side of junction box accommodation portion 26 of lower case 11. The junction box accommodation portion cover 76 has a flat plate shape along the plane of joint flange surface 15U, constituting a part of joint flange surface 15U.

The lower ends of the front end wall 71, rear end wall 72, right side wall 73, and left side wall 74 surrounding the upper case 12 are formed with respective flanges 81 folded outwardly. The underside of each flange 81 constitutes joint flange surface 15U. As described above, the joint flange surface 15U is made to face the joint flange surface 15L of lower case 11, wherein lower case 11 and upper case 12 are fastened by the bolts 18 passing through holes 82 formed in flanges 81. The left side part of upper case 12 is provided with a controller accommodation portion 36U corresponding to the controller accommodation portion 36L of lower case 11.

The shape of first tab portion 21U of upper case 12 in the plan view is basically identical to that of the first tab portion 21L of lower case 11, projecting outwardly with respect to joint flange surface 15U as in the case of lower case 11. The first tab portion 21U is formed slightly above the plane of joint flange surface 15U. This step conforms to the height of first tab portion 21L of lower case 11, so that when the respective joint flange surfaces 15L, 15U are in intimate contact with each other, the respective first tab portions 21L, 21U overlap with each other and is substantially in contact with each other.

The second tab portion 22U of upper case 12 is formed integrally with junction box accommodation portion cover 76, namely, is configured to be continuous with junction box accommodation portion cover 76. The shape of second tab portion 22U in the plan view is basically identical to that of second tab portion 22L of lower case 11. The second tab portion 22U is formed slightly above the plane of joint flange surface 15U. This step conforms to the height of second tab portion 22L of lower case 11, so that when the respective joint flange surfaces 15L, 15U are in intimate contact with each other, the respective second tab portions 22L, 22U overlap with each other and is substantially in contact with each other.

The first tab portion 21U and second tab portion 22U are formed with through holes 27U respectively, which conform to through holes 27L of lower case 11, to form through holes 27 for bolts for mounting to the vehicle body. Moreover, the flanges 81 at the lower end of rear end wall 72 are formed with three similar through holes 27U. Namely, of the eight bolts, the five bolts fasten both of the lower case 11 and upper case 12 to vehicle body 3 by the so-called common fastening.

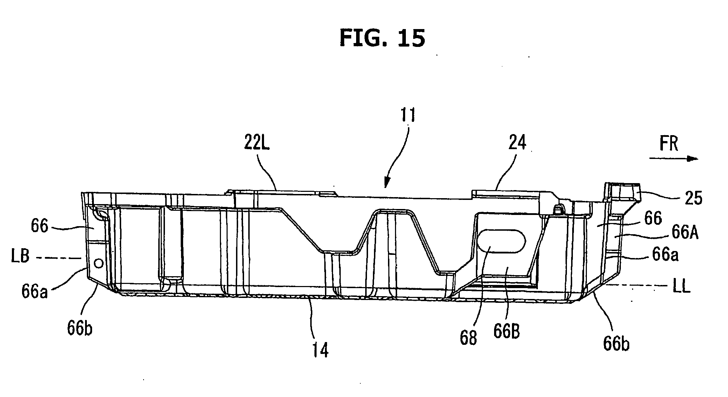

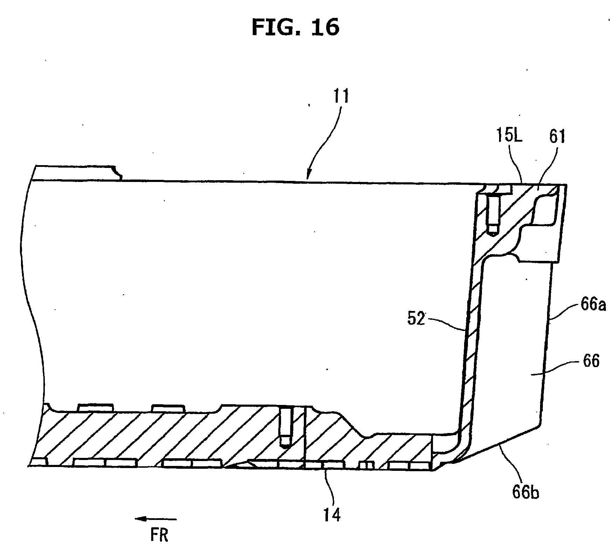

As is clear from FIGS. 15 and 16, the front end wall 51 and rear end wall 52 of lower case 11 extend upward from bottom wall 14 generally in the vertical direction, namely, in a direction substantially perpendicular to bottom wall 14. The outside of each of front end wall 51 and rear end wall 52 is formed integrally with a plurality of cooling fins 66. The cooling fins 66 project forward or rearward in the vehicle travel direction from the front end wall 51 and rear end wall 52, extending also in the vertical direction. Namely, cooling fin 66 has a plate shape along a plane parallel to the vehicle longitudinal direction, namely, parallel to the fore-and-aft direction of battery pack 1. As shown in FIG. 16, the upper end of each cooling fin 66 is integrally continuous with flange 61 of the upper end of front end wall 51 or rear end wall 52, whereas the lower end of cooling fin 66 extends to reach the bottom wall 14 of lower case 11 and is connected to bottom wall 14. The amount of projection of the distal end edge 66a of cooling fin 66 from the surface of front end wall 51 or rear end wall 52 (the amount of projection in the vehicle longitudinal direction) is substantially equal to the width of flange 61 of the upper end. Accordingly, the distal end edge 66a is straight and substantially parallel to front end wall 51 or rear end wall 52, as shown in FIG. 16. The width of cooling fin 66 in the lateral direction as viewed from the front or the rear side of battery pack 1 increases as followed upward, in order to ensure the draft and strength of the connection portion with flange 61. Namely, as shown in FIG. 14, cooling fin 66 has a wedge shape having a relatively small angle.

On the other hand, the lower end edge 66b of cooling fin 66 is inclined to ascend as followed away from front end wall 51 or rear end wall 52. For example, as shown in FIG. 15, cooling fin 66 is inclined diagonally upward from the connection point with bottom wall 14. In a specific example, the inclination of lower end edge 66b of cooling fin 66 of front end wall 51 is about 35 degrees with respect to a horizontal plane as an extension of bottom wall 14, whereas the inclination of the lower end edge 66b of cooling fin 66 of rear end wall 52 is about 25 degrees with respect to the horizontal plane as the extension of bottom wall 14. The present invention is not limited to these specific values. The lower end edge 66b and distal end edge 66a do not need to be strictly straight lines, but may be slightly curved lines or others.

In FIG. 15, an imaginary line LL indicates the height level of ground clearance of vehicle body 3 itself. The inclined lower end edge 66b of cooling fin 66 of front end wall 51 reaches the height level of ground clearance LL. Accordingly, when a foreign object having a height substantially equal to the height level of ground clearance LL (for example, a curb or car stop) collides with cooling fin 66 (cooling fin 66 of front end wall 51) while the vehicle is traveling forward, the foreign object always collides with the inclined lower end edge 66b.

However, since various components of the vehicle body at the side of rear wheels 6 is located above the height level of ground clearance LL in general as described above, it is possible that the rear end wall 52 is exposed to the rear of the vehicle up to an imaginary line LB as an example in FIG. 15. Accordingly, in this embodiment, although it is possible that when the vehicle is traveling rearward the distal end edge 66a of cooling fin 66 (cooling fin 66 of rear end wall 52) collides with a foreign object having a height higher than the height level of ground clearance LL, it is possible that the foreign object collides with lower end edge 66b if the height of the foreign object is lower than the tip of the inclined lower end edge 66b.

The cooling fin 66, which is formed of aluminum alloy superior in thermal conductivity integrally with lower case 11, receives a vehicle traveling wind flown along the undersurface of vehicle body floor 3a, and thereby improves the facility of dissipation and cooling of battery pack 1 without excessively adversely affecting the travel resistance and aerodynamic performance of the vehicle. Since the bottom portion of lower case 11 projects downward with respect to the height level of ground clearance LL of vehicle body 3, it is possible to actively use the vehicle traveling wind and effectively cool the internal cells.

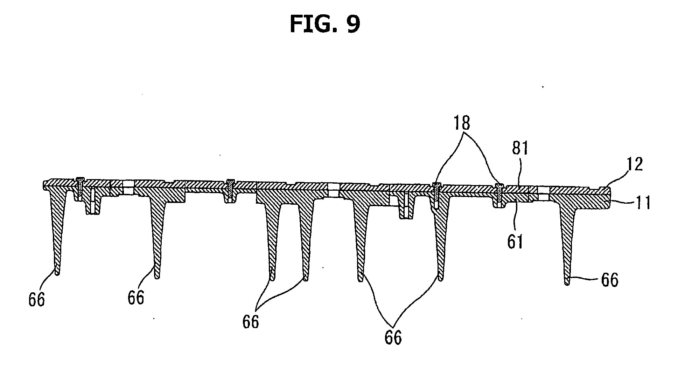

The cooling fin 66 serves as a reinforcing rib or a kind of protector in addition to enhancement of the cooling facility, protecting the front end wall 51 or rear end wall 52 of lower case 11, especially, protecting the front or rear corner portion of the bottom portion of lower case 11 (namely, the connection portion between bottom wall 14 and front end wall 51, and the connection portion between bottom wall 14 and rear end wall 52) from collision with foreign objects. For example, with regard to the rear end wall 52 directed to the rear of the vehicle, it is possible that the rear end wall 52 collides with a curb or the like projecting from a road surface when the vehicle is traveling rearward, but even if the collision occurs, the curb or the like does not collide with the rear end wall 52 itself, but collides with the lower part of cooling fin 66. Since the upper end of cooling fin 66 is connected to flange 61 and the lower end of cooling fin 66 is connected to bottom wall 14, the load of collision is distributed to rigid portions, suppressing direct damages on rear end wall 52 and the corner portion of the lower end of rear end wall 52. FIG. 9 shows a sectional view of cooling fin 66 under a condition where flange 61 of lower case 11 and flange 81 of upper case 12 are fixed by bolts 18. Flanges 61, 81, which receive collision loads from cooling fins 66 under such a condition where case 10 is assembled, are formed as parts having higher rigidity, and thereby are capable of reliably bearing the collision loads. Moreover, if the height of the foreign object is such as to collide with the inclined lower end edge 66b, the inclination of lower end edge 66b serves to further spread the load, and thereby effectively suppress lower case 11 from damages. The inclination of lower end edge 66b further serves to weaken the collision by allowing the foreign object to escape along the inclination, when the inclined lower end edge 66b collides with the foreign object. Naturally, the cooling fins 66 of front end wall 51 function effectively, when colliding with a foreign object when the vehicle is traveling forward.

As shown in FIG. 14 (or in FIG. 4), in the present embodiment, rear end wall 52 is formed with seven cooling fins 66 in total, wherein a pair of cooling fins 66 are provided adjacent to and on respective sides of safety valve 16 (safety valve mounting seat portion 62) arranged at rear end wall 52. The seven cooling fins 66 project in the same shape. Especially as shown in FIGS. 17 and 18, the entire safety valve 16 is accommodated in a space defined by the distal end edges 66a and lower end edges 66b of cooling fins 66. In other words, safety valve 16 does not project outward with respect to the distal end edges 66a and lower end edges 66b of cooling fins 66, so that even when a collision occurs with a curb or the like, safety valve 16 is not damaged. In the shown example, the seven cooling fins 66 are shaped identically. However, cooling fins 66 are not limited to this configuration, but may be shaped differently. It is however desirable that at least one cooling fin 66 adjacent to safety valve 16 has a size enough to protect safety valve 16 as described above.

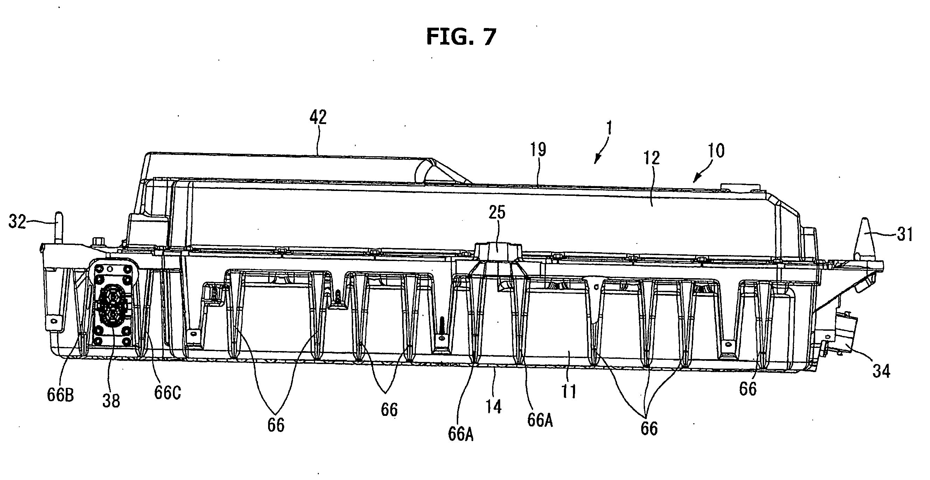

On the other hand, as shown in FIGS. 7 and 11, front end wall 51 is provided with eight identically shaped cooling fins 66, and two relatively large cooling fins 66 (indicated by reference character 66A in FIG. 11) on the sides of front bracket 25. Moreover, front side wall 56 of junction box accommodation portion 26 in which the main plug 38 is accommodated is provided with cooling fins 66B, 66C on the sides of main plug opening 57. The cooling fin 66C has a similar shape as the other cooling fins 66 of front end wall 51. On the other hand, the other cooling fin 66B positioned outside of main plug opening 57 has a substantially trapezoidal shape projecting forward significantly. The upper end of the larger cooling fin 66B is connected to fourth tab portion 24. The significantly projecting cooling fin 66B serves for thermal dissipation, and also protects main plug 38 and a connecter connected to main plug 38 from colliding with a foreign object such as a curb. The cooling fin 66B is formed with an opening 68 for access to main plug 38.

When mounted on the vehicle, a cover not shown made of synthetic resin may be attached to cover locally the main plug 38 and its proximity.

The following describes in detail a locator mechanism implemented by locator pins 31, 32 of first tab portion 21 and second tab portion 22.

As described above, first tab portion 21 is composed of first tab portion 21L of lower case 11 and first tab portion 21U of upper case 12. As shown in FIG. 19, first locator pin 31 is vertically mounted to first tab portion 21L of upper case 12 by a bolt 101.

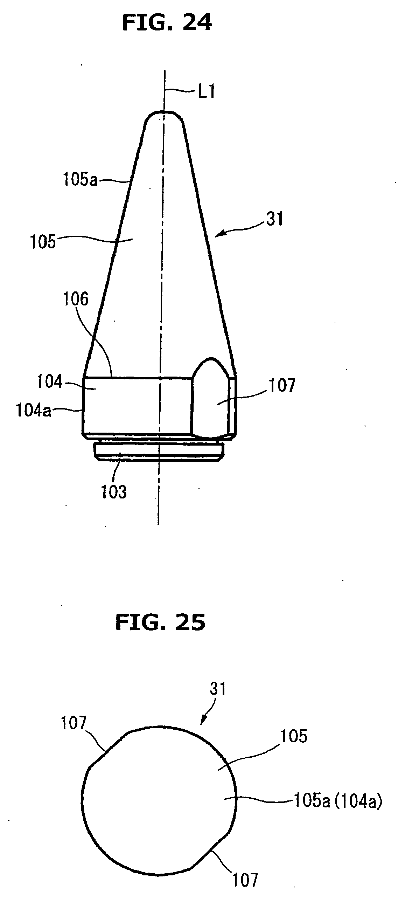

FIGS. 24 to 26 show the first locator pin 31 in detail. The first locator pin 31 includes a D-shaped root portion 103, a circular-cylindrical portion 104 as a straight part, and a tapered conical portion 105 as a tapered distal end portion, wherein root portion 103 is fitted and rotationally fixed in a D-shaped recess portion 102 of first tab portion 21L (see FIG. 19), wherein circular-cylindrical portion 104 has a circular-cylindrical surface 104a at the periphery around a central axis L1 of first locator pin 31, and wherein conical portion 105 has a conical surface 105a at the periphery around the central axis L1. The upper end of circular-cylindrical surface 104a and the lower end of conical surface 105a are continuous with each other at a boundary 106 with no step. As in clear from FIGS. 24 and 25, the circular-cylindrical surface 104a of circular-cylindrical portion 104 is partially cut by two planes parallel to central axis L1 and each other, to form a pair of cutout portions 107. Accordingly, the cross section of circular-cylindrical portion 104 is not a complete circle, but is a shape narrowed by two parallel planes as shown in FIG. 25. The cutout portions 107 of first locator pin 31 are targeted only to circular-cylindrical portion 104, but part of the lower end and its proximity of conical portion 105 has a shape slightly cut out because of its diameter.

The cross section of circular-cylindrical portion 104 is not completely circular as described above, but both of the circular-cylindrical surface 104a and cutout portions 107 are surfaces parallel to the central axis L1, wherein the cross section of circular-cylindrical portion 104 is constant over the region to boundary 106. The side of vehicle body 3 to which battery pack 1 is attached is formed with a first locator hole not shown having a shape corresponding to the shape of circular-cylindrical portion 104 shown in FIG. 25.

The axial length of the circular-cylindrical portion 104, specifically, the height of circular-cylindrical portion 104 from the mounting surface to boundary 106 under the mounted condition of FIG. 19, is substantially equal to a sum of the thickness of first tab portion 21U of upper case 12 and the thickness of the part of vehicle body 3 where the first locator hole not shown is formed.

In the shown example, for convenience of processing, the prepared first locator pin 31 is attached to lower case 11, but lower case 11 may be formed by casting integrally with first locator pin 31.

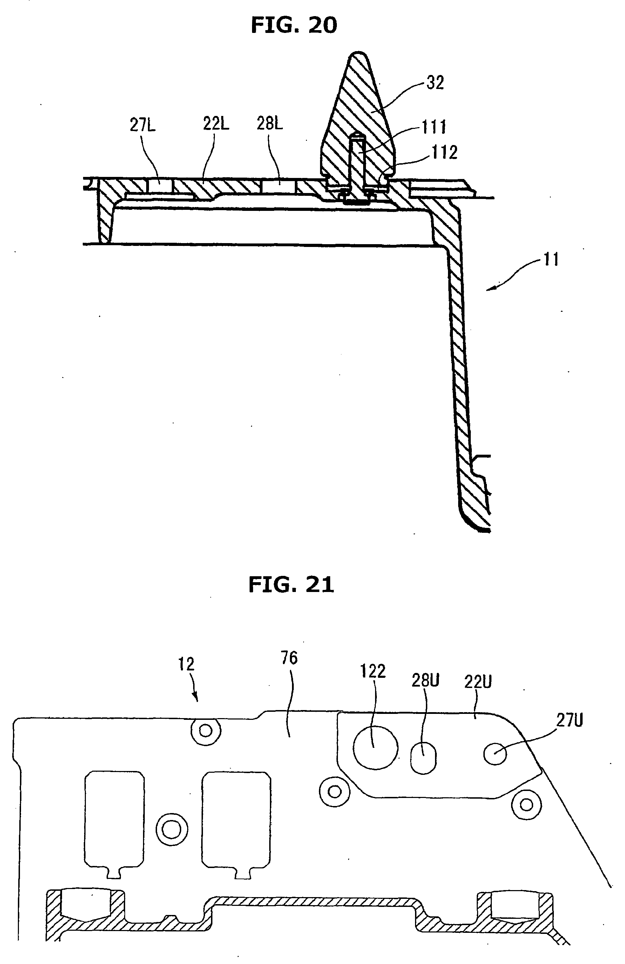

On the other hand, second tab portion 22 is composed of second tab portion 22L of lower case 11 and second tab portion 22U of upper case 12 which have the same plan view basically. As shown in FIG. 20, second locator pin 32 is vertically mounted to second tab portion 22L of lower case 11 by a bolt 111.

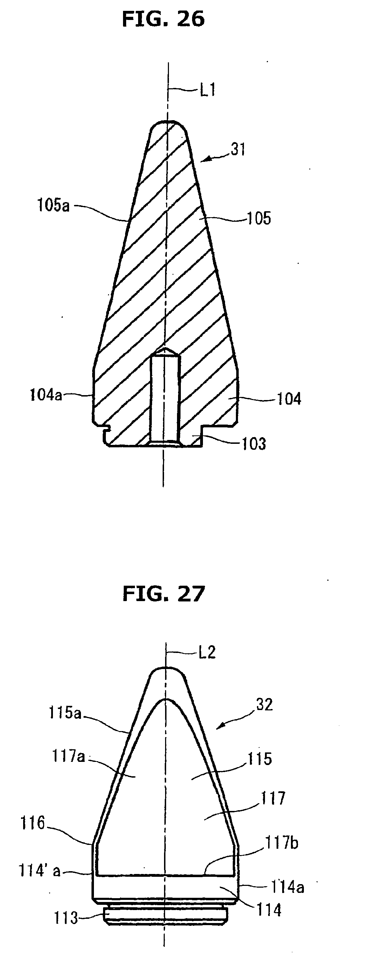

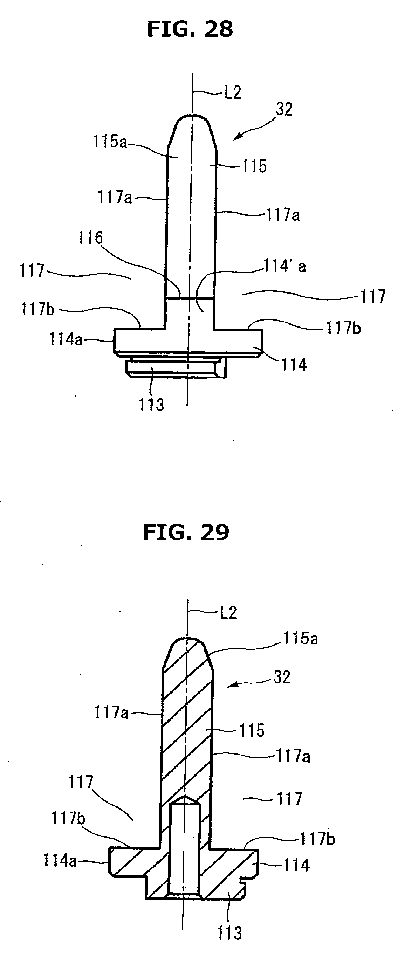

FIGS. 27 to 29 show the second locator pin 32 in detail. The second locator pin 32 includes a D-shaped root portion 113, a circular-cylindrical portion 114, and a flat distal end portion 115, wherein root portion 113 is fitted and rotationally fixed in a D-shaped recess portion 112 of second tab portion 22L (see FIG. 20), wherein circular-cylindrical portion 114 has a circular-cylindrical surface 114a at the periphery around a central axis L2 of second locator pin 32, and wherein flat distal end portion 115 extends upward from circular-cylindrical portion 114 and has a substantially triangular shape. Specifically, the basic shape of second locator pin 32 is a continuous shape including a cylindrical shape and a conical shape similar to first locator pin 31, and the part of the basic shape from the conical part to an intermediate height position of the cylindrical part is cut out by two planes parallel to the central axis L2 and each other, to form a pair of cutout portions 117. Namely, each cutout portion 117 includes a first cutout surface 117a and a second cutout surface 117b, wherein the first cutout surface 117a is parallel to the central axis L2, and the second cutout surface 117b is along a plane perpendicular to the central axis L2. Accordingly, the tapered portion of flat distal end portion 115 includes a conical surface 115a that is a part of the basic shape (not a complete conical shape but a partial surface of a conical shape), and the root portion of flat distal end portion 115 includes a second circular-cylindrical surface 114a' as an extension from circular-cylindrical surface 114a of circular-cylindrical portion 114. Geographically, the circular-cylindrical surface 114a and second circular-cylindrical surface 114a' of circular-cylindrical portion 114 belong to a cylindrical surface. Namely, at two places of the periphery of circular-cylindrical portion 114, the second circular-cylindrical surfaces. 114a' extend in the axial direction. In flat distal end portion 115, the second circular-cylindrical surface 114a' and the conical surface 115a are continuous with each other at boundary 116 with no step.

Accordingly, in the region from the second cutout surface 117b to the boundary 116, the second circular-cylindrical surfaces 114a' and the first cutout surfaces 117a are parallel to the central axis L2, so that the shape of the cross section of flat distal end portion 115 is constant in this region. The vehicle body 3 to which battery pack 1 is attached is formed with a second locator hole not shown which has a shape corresponding to the shape of the cross section of the straight portion of flat distal end portion 115. Specifically, the second locator hole of the vehicle body 3 has a narrow rectangular shape having arc-shaped ends.

The axial length of circular-cylindrical portion 114, specifically, the height of circular-cylindrical portion 114 from a surface to second cutout surface 117b under a condition as shown in FIG. 20 where circular-cylindrical portion 114 is attached to the surface, is substantially equal to the thickness of second tab portion 22U of upper case 12. The height from the attached surface to boundary 116 is substantially equal to a sum of the thickness of second tab portion 22U of upper case 12 and the thickness of the second locator hole portion (not shown) of vehicle body 3.

In the shown example, for convenience of processing, the prepared second locator pin 32 is attached to lower case 11, but lower case 11 may be formed by casting integrally with second locator pin 32.

The height of first locator pin 31 is not equal to but longer than that of second locator pin 32. The height positions of the surfaces of first tab portion 21L and second tab portion 22L to which locator pins 31, 32 are attached are equal to each other with respect to joint flange surface 15, so that the position of the distal end of first locator pin 31 is higher than that of the distal end of second locator pin 32. In a specific example, the first locator pin 31 is formed to be longer by about 10-15 mm. For example, locator pins 31, 32 are relatively large locator pins having diameters of about 20-30 mm and heights of about 50-60 mm.

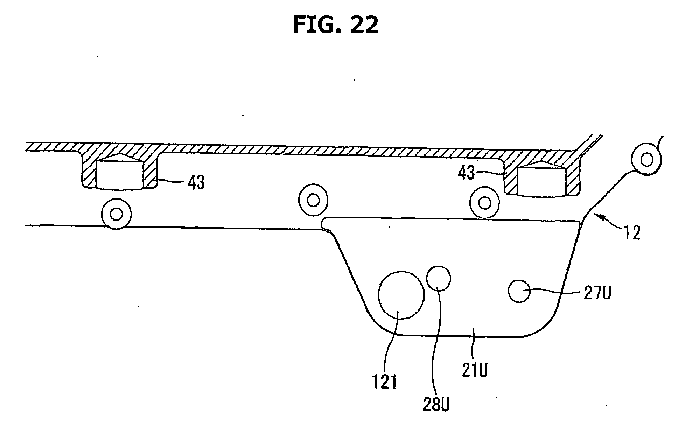

In contrast to the configuration of lower case 11 described above, the first tab portion 21U of upper case 12 includes a first locator hole 121 having a circular shape in which circular-cylindrical portion 104 of first locator pin 31 is fitted, as shown in FIG. 22. The first locator hole 121 is formed as a cylindrical surface parallel to the central axis L1 of first locator pin 31, having a diameter substantially equal to the diameter of circular-cylindrical portion 104 so that circular-cylindrical portion 104 is fitted relatively intimately with the first locator hole 121. Specifically, in the shown example, the first locator hole 121 has a diameter substantially equal to the diameter of circular-cylindrical portion 104 in the fore-and-aft direction of battery pack 1, and has a diameter slightly larger (for example, by about 1 mm) than the diameter of circular-cylindrical portion 104 in the lateral direction of battery pack 1. Accordingly, the first locator hole 121 supports and restrains the circular-cylindrical portion 104 of first locator pin 31 in the fore-and-aft direction of battery pack 1, whereas in the lateral direction of battery pack 1, it is intended to absorb the thermal expansion and tolerance of lower case 11 and upper case 12 which are relatively large parts.

On the other hand, the second tab portion 22U of upper case 12 is provided with second locator hole 122 that has a circular shape fitted with the circular-cylindrical portion 114 of second locator pin 32, as shown in FIG. 21. The second locator hole 122 is formed as a cylindrical surface parallel to the central axis L2 of second locator hole 122, having a diameter substantially equal to the diameter of circular-cylindrical portion 114 so that circular-cylindrical portion 114 is fitted relatively intimately with the second locator hole 122. In contrast to the first locator hole 121 having the slightly long elliptical shape, the second locator hole 122 has a truly circular shape so that the entire periphery of second locator hole 122 supports and restricts circular-cylindrical portion 114 of second locator pin 32. Accordingly, between lower case 11 and upper case 12, the fitting between second locator pin 32 and second locator hole 122 defines a strict position reference, whereas first locator pin 31 absorbs slight thermal expansion and tolerance.

The thus-configured locator mechanism has a first function of locating the upper case 12 with respect to lower case 11 during assembling of battery pack 1. Specifically, during assembling operation, upper case 12 is placed on lower case 11 by manual operation with a zig or by a robot arm or the like under a condition stacks of battery modules and a junction box are mounted in lower case 11. This is implemented by allowing the lower case 11 to move downward under a condition where the first locator hole 121 and second locator hole 122 at the left and the right sides are conformed roughly in position to the first locator pin 31 and second locator pin 32, respectively. The first locator pin 31 serves for centering by distal-end-side conical portion 105, so that the circular first locator hole 121 is naturally guided to the proximal-side circular-cylindrical portion 104, and fitted with circular-cylindrical portion 104. Similarly, although the distal end portion of second locator pin 32 has a flat shape, the conical surface 115a of flat distal end portion 115 serves for centering, so that the circular second locator hole 122 is naturally guided to the proximal-side circular-cylindrical portion 114, and fitted with circular-cylindrical portion 114.

Especially, because the first locator pin 31 is sufficiently different from second locator pin 32 in the height, the distal end of first locator pin 31 gets into first locator hole 121 prior to second locator pin 32 as lower case 11 moves downward. Then, under the condition where first locator hole 121 is fitted loosely with first locator pin 31, second locator pin 32 gets into second locator hole 122, so that the locating operation becomes significantly easy.

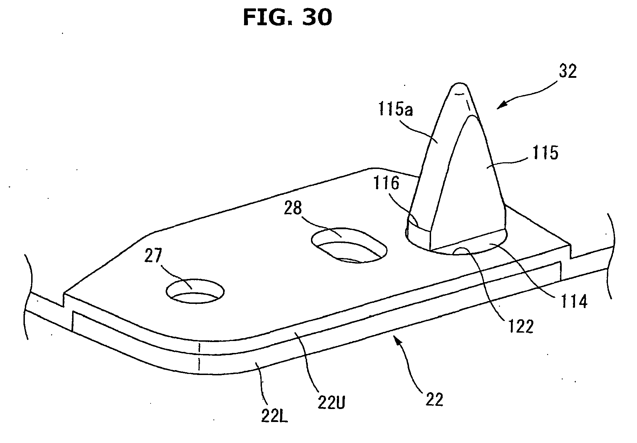

Under the condition where lower case 11 and upper case 12 are located with respect to each other as described above, lower case 11 and upper case 12 are fixed to each other by the peripheral bolts 18. Under this condition where battery pack 1 is completed, locator pins 31, 32 project or extend upward from first tab portion 21 and second tab portion 22 that are mounting flanges to vehicle body 3. First locator pin 31 further projects through first locator hole 121 of upper case 12 (see FIG. 4). On the other hand, in the case of second locator pin 32, only the flat distal end portion 115 projects upward from the upper surface of second tab portion 22 with circular-cylindrical portion 114 fitted in second locator hole 122 of upper case 12, as shown in FIG. 30. In this way, under the condition where battery pack 1 is completed, circular-cylindrical portion 104 and circular-cylindrical portion 114 are fitted relatively intimately with first locator hole 121 and second locator hole 122, and upper case 12 is already fixed rigidly to lower case 11 by bolts 18, so that locator pins 31, 32 are conversely supported by first locator hole 121 and second locator hole 122. Accordingly, the rigidity of locator pin 31, 32 is enhanced as compared to an initial condition where locator pins 31, 32 are supported only by first tab portion 21L and second tab portion 22L of lower case 11.

As shown in FIG. 3, first locator pin 31 and second locator pin 32 are in symmetrical positions, so that as a straight line is assumed to connect the first locator pin 31 and second locator pin 32, this straight line is parallel to the front edge and rear edge of battery pack 1 and perpendicular to the vehicle longitudinal direction. The two flat surfaces of flat distal end portion 115 of second locator pin 32, namely, the first cutout surfaces 117a, form tangents to a circle around the central axis L1 of first locator pin 31 as a center.

Under the condition where battery pack 1 is completed, the locator mechanism has a second function of locating the battery pack 1 with respect to vehicle body 3 while battery pack 1 is attached to vehicle body 3.

Specifically, vehicle body 3 is provided with the first and second locator holes (not shown) having the shapes corresponding respectively to first locator pin 31 and second locator pin 32. In the case where a small clearance is given to one of them for absorbing thermal expansion difference and tolerance, it is desirable to provide the small clearance between the first locator pin 31 and the second locator hole with the fitting between second locator pin 32 and the second locator hole serving as a strict position reference, in conformance with the relationship between lower case 11 and upper case 12.

Since battery pack 1 is attached from the underside to vehicle body 3, a suitable lifter or the like can be used to lift the battery pack 1 while roughly locating the first locator pin 31 and second locator pin 32 to the first locator hole and second locator hole of vehicle body 3 respectively. The distal-end-side conical portion 105 of first locator pin 31 serves for centering, so that circular-cylindrical portion 104 is naturally guided into and fitted in circular first locator hole. Similarly, second locator pin 32 is naturally centered in the fore-and aft direction by the conical surface 115a of flat distal end portion 115, so that the straight portion of flat distal end portion 115 of second locator pin 32 (part of second circular-cylindrical surface 114a') is naturally fitted into the narrow second locator hole.

The configuration that the first locator pin 31 having the conical distal end portion is longer than the second locator pin 32 being flat, and the first locator pin 31 gets into the first locator hole prior to second locator pin 32 when battery pack 1 moves upward, allows battery pack 1 to rotate about first locator pin 31 with the distal end of first locator pin 31 fitted loosely in the first locator hole. Accordingly, when second locator pin 32 having the flat shape along the tangential direction about the first locator pin 31 as a center, gets into the second locator hole, following the first locator pin 31, battery pack 1 is guided into a specific position naturally by the tapered shape of flat distal end portion 115. Finally, non-circular portions of first locator pin 31 and second locator pin 32 are fitted in the respective locator holes, which reliably restricts the posture of battery pack 1 in the rotational direction, and thereby achieves a highly accurate locating operation.

As described above, in the present embodiment, the lower case 11 and upper case 12 are located by locator pins 31, 32, and battery pack 1 is simultaneously located with respect to vehicle body 3 by the same locator pins 31, 32. This simplifies the locator mechanism and thereby makes accuracy control easy, as compared to cases where locator mechanisms are provided individually.

The configuration that battery pack 1 itself is provided with locator pins 31, 32, makes it easy to reattach battery pack 1 to a specific place of vehicle body 3 with no special locating zig, for example, when battery pack 1 is detached from vehicle body 3 for vehicle check and maintenance.

## Claims

1. An electric vehicle (2) comprising:
a vehicle body floor (3a); and
an electric vehicle driving battery pack (1) mounted to an underside of the vehicle body floor; wherein
the electric vehicle driving battery pack includes:
a casing (10), wherein the casing includes an upper case (12) and a lower case (11); and
multiple cells accommodated in the casing;
at least the lower case of the casing is made of metal by die casting;
at least one end wall of a front end wall (51) and a rear end wall (52) of the lower case facing in a vehicle travel direction is formed integrally with a plurality of plate-shaped ribs (66);
each rib projects from the one end wall in the vehicle travel direction, and extends in a vertical direction, and includes an upper end connected integrally with a flange (61) of a periphery of the lower case, and includes a lower end reaching a bottom wall (14) of the lower case.

2. The electric vehicle as claimed in Claim 1, wherein the lower end of the rib includes an edge (66b) ascending as followed away from the one end wall.

3. The electric vehicle as claimed in Claim 1 or 2, wherein:
the casing is hermetically sealed; and
a safety valve (16) is disposed at the one end wall, and adjacent to the ribs, and is configured to open in response to a rise of an internal pressure of the casing.

4. The electric vehicle as claimed in Claim 3, wherein the safety valve is disposed between adjacent two of the ribs.

5. The electric vehicle as claimed in any one of Claims 1 to 4, wherein the bottom wall of the lower case projects downward below a ground clearance level of a vehicle body.

6. The electric vehicle as claimed in any one of Claims 1 to 5, wherein the ribs are cooling fins.

## Patentansprüche

1. Elektrofahrzeug (2), umfassend:
- einen Fahrzeugkarosserieboden (3a); und
- ein Elektrofahrzeug-Antriebsbatteriepack (1), das an einer Unterseite des Fahrzeugkarosseriebodens befestigt ist; wobei
- das Elektrofahrzeug-Antriebsbatteriepack umfasst:
- ein Gehäuse (10), wobei das Gehäuse ein oberes Gehäuse (12) und ein unteres Gehäuse (11) umfasst; und
- mehrere Zellen, die im Gehäuse aufgenommen sind;
- zumindest das untere Gehäuse des Gehäuses durch Metalldruckguss hergestellt ist;
- zumindest eine Endwand einer vorderen Endwand (51) und eine hintere Endwand (52) des unteren Gehäuses, das einer Fahrzeugfahrtrichtung zugewandt ist, einstückig mit einer Mehrzahl von plattenförmigen Rippen (66) ausgebildet ist;
- wobei jede Rippe von der einen Endwand in die Fahrzeugfahrtrichtung hervorsteht und sich in eine vertikale Richtung erstreckt, und ein oberes Ende, das einstückig mit einem Flansch (61) eines Umfangs des unteren Gehäuses verbunden ist, und ein unteres Ende umfasst, das eine Bodenwand (14) des unteren Gehäuses erreicht.

2. Elektrofahrzeug gemäß Anspruch 1, wobei das untere Ende der Rippe eine Kante (66b) umfasst, die weg von der einen Endwand folgend aufsteigt.

3. Elektrofahrzeug gemäß Anspruch 1 oder 2, wobei:
- das Gehäuse hermetisch abgedichtet ist; und
- ein Sicherheitsventil (16) an der einen Endwand und benachbart zu den Rippen angeordnet ist, und eingerichtet ist, um als Reaktion auf einen Anstieg eines Innendrucks des Gehäuses zu öffnen.

4. Elektrofahrzeug gemäß Anspruch 3, wobei das Sicherheitsventil zwischen zwei benachbarten Rippen angeordnet ist.

5. Elektrofahrzeug gemäß einem der Ansprüche 1 bis 4, wobei die Bodenwand des unteren Gehäuses nach unten unter ein Bodenfreiheitsniveau einer Fahrzeugkarosserie hervorsteht.

6. Elektrofahrzeug gemäß einem der Ansprüche 1 bis 5, wobei die Rippen Kühlrippen sind.

## Revendications

1. Véhicule électrique (2) comprenant :
un plancher de carrosserie de véhicule (3a) ; et
un bloc de batteries d'entraînement de véhicule électrique (1) monté sur un côté inférieur du plancher de carrosserie de véhicule ; où
le bloc de batteries d'entraînement de véhicule électrique comporte :
un boîtier (10), où le boîtier comporte une boîte supérieure (12) et une boîte inférieure (11) ; et
plusieurs cellules logées dans le boitier ;
au moins la boîte inférieure du boîtier est réalisée en métal par moulage sous pression ;
au moins une paroi d'extrémité d'une paroi d'extrémité avant (51) et d'une paroi d'extrémité arrière (52) de la boîte inférieure faisant face dans une direction de déplacement de véhicule est formée d'un seul tenant avec une pluralité de nervures en forme de plaque (66) ;
chaque nervure fait saillie à partir de la paroi d'extrémité dans la direction de déplacement de véhicule, et s'étend dans une direction verticale, et comporte une extrémité supérieure reliée d'un seul tenant avec une bride (61) d'une périphérie de la boîte inférieure, et comporte une extrémité inférieure atteignant une paroi de fond (14) de la boîte inférieure.

2. Véhicule électrique tel que revendiqué dans la revendication 1, dans lequel l'extrémité inférieure de la nervure comporte un rebord (66b) s'élevant comme suit loin de la paroi d'extrémité.

3. Véhicule électrique tel que revendiqué dans la revendication 1 ou 2, dans lequel :
le boîtier est scellé hermétiquement ; et
une soupape de sûreté (16) est disposée au niveau de la paroi d'extrémité, et adjacente aux nervures, et est configurée pour s'ouvrir en réponse à une augmentation de la pression interne du boîtier.

4. Véhicule électrique tel que revendiqué dans la revendication 3, dans lequel la soupape de sûreté est disposée entre deux nervures adjacentes parmi les nervures.

5. Véhicule électrique tel que revendiqué dans l'une quelconque des revendications 1 à 4, dans lequel la paroi de fond de la boîte inférieure fait saillie vers le bas en dessous d'un niveau de garde au sol d'une carrosserie de véhicule.

6. Véhicule électrique tel que revendiqué dans l'une quelconque des revendications 1 à 5, dans lequel les nervures sont des ailettes de refroidissement.
